# EUROPEAN PATENT SPECIFICATION

(11) **EP 0 431 357 B1**
(45) Date of publication and mention of the grant of the patent: **01.05.1996**
(21) Application number: 90121745.5
(22) Date of filing: 13.11.1990
(51) Int. Cl.: C10L 1/32, C10L 1/02, F02B 51/02

(54) **Method of combustion of an aqueous fuel in an internal combustion engine**
Verfahren zur Verbrennung eines wässerigen Brennstoffes in einem Explosionsmotor
Procédé de combustion d'un carburant aqueux dans un moteur à explosion

(30) Priority: 22.11.1989 US 440224
(43) Date of publication of application: 12.06.1991
(73) Proprietor: Gunnerman, Rudolph W., Sacramento, California 95814 (US)
(72) Inventor: Gunnerman, Rudolph W., Sacramento, California 95814 (US)
(74) Representative: Grünecker, Kinkeldey, Stockmair & Schwanhäusser Anwaltssozietät

(56) References cited:
- EP-A- 0 025 298
- EP-A- 0 095 823
- WO-A-88/04311
- WO-A-89/10951
- WO-A-91/07579
- WO-A-92/07922
- GB-A- 205 582
- GB-A- 669 037

## Description

The present invention relates to a method for combusting an aqueous fuel in an internal combustion engine.

There is a need for new fuels to replace gasoline for use in internal combustion engines. Internal combustion engines operating on gasoline, Kerosene and diesel fuel produce unacceptably high amounts of pollutants which are injurious to human health and may damage the earth's atmosphere. The adverse effects of such pollutants upon health and the atmosphere have been subject of great public discussion and will not be belabored any further.

GB-A-0669037 discloses a motor fuel comprising a homogenious liquid blend containing a hydrocarbon component, a straight chain alcohol and water. This fuel is useful to power a spark ignition internal combustion engine.

GB-A-0205582 discloses an inflammable vaporisable homogenious liquid fuel consisting of alcohol, a hydrocarbon and water.

EP-A-0095823 discloses an alcohol fuel composition comprising one or more lower alcohols and an additive comprising an essential oil. The mixture can be used to power an internal combustion engine.

WO-A-88/04311 discloses stable oil-in-water/alcohol emulsions useful as substituents for diesel fuel and/or light heating oil, the continuous phase consisting of a water/alcohol mixture and the discontinuous phase consisting of heavy, waxy oils containing more than 50% alkanes.

EP-A-0372353 (relevant with respect to Article 54(3) EPC) discloses a fuel for reducing the noxiousness of exhaust gases, particularly for internal combustion engines, the fuel comprising a mixture of a fuel with 10 to 42% water with respect to the fuel, with the addition of a lubricating antifreeze activator in an amount of from 0.5 to 2% based on the amount of the fuel.

The object of the present invention is to provide a method for combusting an aqueous fuel in an internal combustion engine whereby the pollutants produced by the engine are reduced.

This object has been solved by providing a
method for combusting an aqueous fuel in an internal combustion engine to produce approximately as much power as the same volume of gasoline, said internal combustion engine being capable of producing a range of engine revolutions per minute (rpm) and having one or more combustion chambers and a carburetor or a fuel injection system for mixing said fuel and air and introducing said mixture into said combustion chamber or chambers, said method comprising:
preheating said air for combustion and introducing said preheated air into said carburetor or fuel injection system,
introducing said aqueous fuel into said carburetor or fuel injection system to mix with said combustion air, said fuel comprising water from 20% to 70% by volume of the total volume of said fuel, and a carbonaceous material selected from the group consisting of ethanol, methanol, gasoline, diesel and kerosene fuel, or mixtures thereof, and
introducing and combusting said aqueous fuel and combustion air in said combustion chamber or chambers in the presence of a hydrogen-producing catalyst to operate said engine.

The aqueous fuel used in the present invention is less expensive than gasoline, Kerosene or diesel fuel because its primary ingredient is water.

The aqueous fuel used in the present invention has about 1/3 the potential energy (BTU'S) of gasoline, but when used to operate an internal combustion engine, it will produce approximately as much power as compared with the same amount-of gasoline. This is indeed surprising and is believed to be due to the release and combustion of hydrogen and oxygen when the aqueous fuel is combusted by the method of the present the invention.

The aqueous fuel used in the present invention comprises substantial amounts of water from 20% to 70% by volume of the total volume of said fuel, and a carbonaceous material selected from the group consisting of gasoline, Kerosene, ethanol, methanol, diesel fuel, or mixtures thereof. In utilizing this fuel with the method of the present invention, combustion air is preheated and introduced into the engine's carburetor or fuel injection system for mixing with the aqueous fuel. When using an engine with a carburetor, the combustion air is preferably preheated to at least 177°C (350°F) to 204°C (400°F) as it enters the carburetor. When using an engine with a fuel injection system, the combustion air is preferably preheated from 50°C (122°F) to 70°C (158°F) as it enters the fuel injection system. The air/fuel mixture is then introduced into the combustion chamber or chambers and combusted in the presence of a hydrogen-producing catalyst to operate the engine.

### Detailed Description of the Preferred Embodiment

The aqueous fuel used in the present invention comprises water from 20% to 70%, preferably from 20 % to 50 % by volume of the total volume of the fuel and a carbonaceous material selected from the group consisting of ethanol, methanol, gasoline, Kerosene diesel fuel or mixtures thereof. Ethanol and methanol generally contain small percentages of water when produced commercially. Commercial grades of ethanol and methanol are marketed in terms of a proof number, such as for example, 100 proof ethanol. One half the proof number is generally an indication of the amount of ethanol present, i.e., 100 proof ethanol contains 50 percent ethyl alcohol and 50 percent. water, 180 proof ethanol contains 90 percent of ethyl alcohol and 10 percent of water, etc.

The aqueous fuel used in the present invention is usable in conventional , gasoline, Kerosene or diesel powered internal combustion engines for use in e.g. automobiles, trucks, jets and the like, using conventional carburetors or fuel injection systems. The only modification necessary to such engines to make them usable with the aqueous fuel used in the present invention is the installation of a hydrogen-producing catalyst in the combustion chamber or chambers of the engine, the installation of a heater to preheat the combustion air for the engine, and the installation of a heat exchanger to use the hot exhaust gases from the engine to preheat the combustion air after the engine is operating, at which time the heater is shut off.

In practicing the method of the present invention, combustion air for the engine is preheated before it is introduced into the carburetor or fuel injection system. When using an engine with a carburetor, the combustion air is preferably preheated to at least 177°C (350°F) to 240°C (400°F) as it enters the carburetor. When using an engine with a fuel injection system, the combustion air is preferably preheated from 50°C (122°F) to 70°C (158°F) as it enters the fuel injection system. The aqueous fuel used in the present invention is also introduced into the carburetor or fuel injection system and is mixed with the combustion air. The aqueous fuel may be preheated but is preferably introduced into the carburetor or fuel injection system at Ambient temperatures. The air/fuel mixture is then introduced into the combustion chamber or chambers where e.g. a spark from a spark plug ignites the air/fuel mixture in the conventional manner when the piston of the combustion chamber reaches the combustion stage of the combustion cycle. The presence of a hydrogen-producing catalyst in the combustion chamber and preheated condition of the combustion chamber is believed to liberate hydrogen and/or oxygen from the water in the aqueous fuel when the spark plug ignites the air/fuel mixture. The hydrogen and oxygen are also ignited during combustion to increase the amount of energy delivered by the fuel. Thus, it was observed in experiments using 100 proof alcohol as the engine fuel that the engine produced the same amounts of watts per hour as compared with the same amount of gasoline. This is indeed surprising in view of the fact that the 100 proof ethanol has about 48,000 BTU's (50.64 MJ) per gallon (3.785 l) as compared to gasoline, which has about 123,000 BTU's (129.77 MJ) per gallon (3.785 l), nearly three times as much. The fact that the lower BTU ethanol is able to generate as much power as a higher BTU gasoline suggests that additional power must be attributable to the liberation and combustion of hydrogen and/or oxygen from the water.

Inasmuch as 100 proof ethanol has been found to be a satisfactory fuel in practicing the method of the present invention, it is apparent that other suitable fuels may be made by blending ethanol and/or methanol with gasoline, Kerosene or diesel fuel depending on whether the fuel is to be used in a gasoline or diesel powered engine or in a jet engine. Experimental work also indicates that 84 proof (58% water) ethanol may also be used as a fuel.

### The Engine with Carburetor

To demonstrate the present invention, an engine was selected which also had the capacity to measure a predetermined workload. The engine selected was a one-cylinder, eight horsepower (6.0 KW) internal combustion engine connected to a 4,000 watt per hour a/c generator. The engine/generator was manufactured by the Generac Corporation of Waukesha, Wisconsin under the tradename Generac, Model No. 8905-0(S4002). The engine/generator is rated to have a maximum continuous a/c power capacity of 4,000 watts (4.0 KW) single phase.

The engine specifications are as follows:
Engine Manufacturer - Tecumseh
Manufacturer's Model No. - HM80 (Type 155305-H)
Rated Horsepower (KW) - 8 (6.0) at 3600 rpm
Displacement - 19.4 cubic inches (318.3 ml)
Cylinder Block Material - Aluminum with cast iron sleeve
Type of Governor - Mechanical, Fixed Speed
Governed Speed Setting - 3720 rpm at No-Load (Rated a/c frequency and voltage (120/240 volts at 62 hertz) are obtained at 3600 rpm. The no-load setting of 3720 rpm provides 124/248 volts at 62 hertz. A slightly high no-load setting helps ensure that engine speed, voltage and frequency do not drop excessively under heavier electrical loading.)
Type of Air Cleaner - Pleated Paper Element
Type of Starter - Manual, Recoil Rope
Exhaust Muffler - Spark Arrestor Type
Ignition System - Solid State with Flywheel Magneto
Spark Plug - Champion RJ-17LM (or equivalent)
Set Spark Plug Gap to - 0.030 inch (0.76mm)
Spark Plug Torque - 15 foot-pounds (25.4 Nm)
Crankcase Oil Capacity -(1 1/2 pints (24 ounces)) (710 ml)
Recommended Oil - Use oil classified "For Service SC, SD or SE"
Primary Recommended Oil - SE 10W-30 Multiple
Viscosity Oil
Acceptable Substitute - SAE 30 Oil
Fuel Tank Capacity - 1 gallon (3.785 l)
Recommended Fuel -
Primary - Clean, Fresh UNLEADED Gasoline
Acceptable Substitute - Clean, Fresh, Leaded
REGULAR Gasoline

A heat exchanger was installed on the engine to use the hot exhaust gases from the engine to preheat the air for combustion. A platinum bar was installed to the bottom surface of the engine head forming the top of the combustion chamber. The platinum bar weighed one ounce (28.35 g) and measured 2 5/16 inches (5.87 cm) in length, 3/4 inches (1.91 cm) in width, and 1/16 inch (0.16 cm) in thickness. The platinum plate was secured to the inside of the head with three stainless steel screws.

A second fuel tank having a capacity of two liters was secured to the existing one-liter fuel tank. A T-coupling was inserted into the existing fuel line of the motor for communication with the fuel line for each fuel tank. A valve was inserted between-the T-coupling and the fuel lines for each fuel tank so that either tank could be used separately to feed fuel to the carburetor. or to mix fuels in the fuel line leading to the carburetor.

### Test Runs

A series of tests were performed to determine if 100 proof ethanol could be used in the motor which was modified as described above, and if so, to compare the performance of the 100 proof ethanol with the same amount of gasoline.

Two liters of unleaded gasoline were poured into the second fuel tank with the valve for the second tank in the closed position. Three and eight tenths liters of 100 proof ethanol were poured into the one gallon (3.785 l) fuel tank with the valve in the closed position. The valve for the gasoline tank was opened so that the engine could be initially started on gasoline.

Within three minutes of starting the motor, the combustion air entering into the carburetor was measured at 82°C (180°F). At this point, the fuel valve under the ethanol tank was opened and the valve under the gasoline tank was closed. At that point, the temperature of the air entering the carburetor had risen to 93°C (200°F).

Ethanol was now the primary fuel in the motor which exhibited a certain amount of roughness during operation until the choke mechanism was adjusted by reducing the air intake to the engine by approximately 90%. Immediately thereafter, two, 1800 watt, heat guns, having a rated heat output of 205°C (400°F), were actuated and used to heat the combustion air as it entered the carburetor. The temperature of the air from the heat guns measured 199°C (390°F) to 202°C (395°F).

After the engine ran on ethanol for approximately 20 minutes, the heat measurement in the incoming combustion air stabilized between 175°C (347°F) and 178°C (352°F). -The engine was run on the 100 proof ethanol fuel for 40 additional minutes, for a total of one hour, until two liters of ethanol had been used. The valve under the ethanol tank was then closed and the engine was turned off by opening the choke. Eighteen hundred milliliters of ethanol were left remaining in the tank.

The choke was then reset to the 90% closed position, and the engine was started once again. The engine responded immediately and ran as smoothly on 100 proof ethanol as it did during the one-hour operation.

The engine was stopped and started in the same manner on three separate occasions thereafter with the same results.

While operating the engine on 100 proof ethanol, the power output on the generator was measured and indicated that the ethanol produced 36,000 watts during a one-hour period using two liters of ethanol having 48,000 BTUs (50.64 MJ) per gallon (3.785 l).

After the engine had stopped running on ethanol, it was operated again with the two liters of gasoline in the gasoline tank. 47 minutes into the test, the engine stopped because it ran out of gasoline. Measurements taken on the generator indicated that, when the engine was operated on gasoline, it was producing power at a rate of 36,000 watts per hour for 47 minutes, using two liters of gasoline having 123,000 BTUs (129.77 MJ) per gallon (3.785 l).

Comparing these power measurements indicates that two liters of 100 proof ethanol produces the same amount of power as two liters of gasoline. This is surprising inasmuch as the gasoline has about 2.5 times as many BTUs as the same amount of 100 proof ethanol. This indicates that the extra power from the ethanol must be due to the liberation and combustion of hydrogen and/or oxygen from the relatively large amounts of water in the fuel.

Although gasoline was used as the starter fuel to preheat the engine and, thus, generate hot exhaust gases to preheat the combustion air, the use of the gasoline as the starter fuel is not necessary and could be replaced with an electrical heat pump to preheat the combustion air until the heat exchanger could take over and preheat the combustion air, whereupon the electrical heat pump would turn off.

The above tests comparing the use of the 100 proof ethanol and gasoline were repeated on three subsequent occasions, each with the same results.

A second series of tests were run which were identical to the above, except for the use of 84 proof ethanol (42% ethyl alcohol and 58% water) in place of the 100 proof ethanol. However, after running about 30 seconds on the 84 proof ethanol, the engine stopped abruptly and released a fair amount of oil under high pressure from the main bearing in the main engine. The engine was restarted and abruptly stopped again after operating for about 20 seconds.

The above stoppage appears to have been due to preignition of the hydrogen and/or oxygen during the upstroke period of the piston which caused pressure buildup in the crank case, which in turn forced oil under pressure through the main bearing. The pressure inside the combustion chamber appears to have been relieved through the piston rings into the crank case, and then relieved through the main bearing.

The premature ignition of the hydrogen and/or oxygen was probably caused by generating a larger amount of oxygen and hydrogen which did not occur when using 100 proof ethanol having a lesser amount of water.

The preignition problem can probably be cured by using an engine having a shorter piston stroke to reduce the dwell time of the fuel, including hydrogen and oxygen, in the combustion chamber, or by adjusting the carburetor or the electronically controlled fuel injection system to help reducing dwell time to avoid generating excessive amount of hydrogen and oxygen. The engine used in the experiment had a relatively long piston stroke of 6 inches (15.24 cm). The piston stroke should be no more than about 1 1/2 inches (3.81 cm) or less to avoid the preignition problem in that particular engine.

### ENGINE WITH ELECTRONICALLY CONTROLLED FUEL INJECTION SYSTEM

A series-of tests were run on an engine having an electronically controlled fuel injection system to determine if that would solve the preignition problem discussed above. The engine used for this purpose was a 3-cylinder turbo charge electronically controlled internal combustion engine from a 1987 Chevrolet Sprint which had been driven about 37,000 miles (59,570 Km).

The head from the motor block was removed and cleaned to remove carbon deposits. Three platinum plates were attached to the inside of each head so as not to interfere with valves moving inside the heads during operation. Each platinum plate was 1 cm in length and width and was 1/32 of an inch (0.8 mm) in thickness. Each platinum plate was attached to the head with one stainless steel screw through the center of each piece. Carbon deposits were cleaned off each piston head and the engine was reassembled using new gaskets.

The combustion air intake hose which exits from the turbo and leads to the injector module is divided in the middle and attached to a heat exchanger to cool the combustion air delivered to the injector. The heat exchanger was bypassed by using two Y junctions on either side of the heat exchanger and by putting a butterfly valve on the side closest to the turbo so that the hot air stream could be diverted around the heat exchanger and introduced directly into the injector module. All pollution abatement equipment was removed from the engine but the alternator was kept in place. The transmission was reattached to the engine because the starter mount is attached to the transmission. The transmission was not used during the testing. This engine was inserted into a Chevrolet Sprint car having a tailpipe and muffler system which was necessary for the engine to run properly. The catalytic converter was left in the exhaust train but the inside of the converter was removed as it was not needed. Two one gallon (3.785 l) plastic fuel tanks were hooked up to the fuel pump by a T-section having manual valves so the fuel to the fuel pumped could be quickly changed by opening or closing the valves.

### TEST RUNS

A series of test runs were performed to determine how the engine as modified above would run using a variety of fuels.

The first test utilized 200 proof methanol as a starter fluid. The engine started and operated when the fuel pressure was raised to 60 to 75 lbs (27.2 to 34.0 Kg). When using gasoline, the fuel pressure is aenerally set at 3.5 to 5 lbs. (1.6 to 2.3 Kg).

While the engine was running on the 200 proof methanol, the fuel was changed to 100 proof denatured ethanol and the motor continued operating smoothly at 3500 revolutions per minute (rpm). After about two minutes the test was stopped and the engine shut down because the fuel hoses were bulging and became unsafe. These hoses were replaced with high pressure hoses and. the plastic couplings and the T's were also replaced with copper couplings and T's. A new pressure gage was attached. During the testing, it was noted that the fuel mixture needed more combustion air and that the computerized settings of the engine could not be adjusted to provide the additional air. To overcome this, the air intake valve was opened.

After these modifications, a new series of tests were performed using 200 proof methanol in one of two fuel tanks. The engine started on the 200 proof methanol and the rpm setting was adjusted to 3500. The engine was allowed to run for a few minutes. During that time, the fuel pressure was adjusted and it was noted that 65 lbs. (29.5 Kg). of pressure appeared to be adequate. A thermocouple was inserted close to the injector module and provided a reading of 65°C after about 5 minutes.

A fuel mixture comprising 500 ml of distilled water and 500 ml of 200 proof methanol were put into the second fuel tank and was used to operate the engine. Without changing the air flow, the temperature of the combustion air rose from 65 to 75°C after about 1 minute. The rpm reading dropped to 3100 rpm. The engine ran very smoothly and was turned off and restarted without difficulty.

The next step in the test series was to determine how variations in the water content of the fuel effected engine performance. Using 199 proof denatured ethanol as starter fuel, the engine started immediately. The fuel pressure setting was reduced from 65 lbs. (29.5 Kg) to 50 lbs (22.7 Kg), the combustion air measured 65°C, the rpm's measured 3500, and the engine ran smoothly.

The fuel was then changed into 160 proof denatured ethanol. The fuel pressure was maintained at 50 lbs. (22.7 Kg). The combustion air temperature was measured at 67°C, the rpm's decreased to 3300, and the engine ran smoothly.

After 10 minutes, the fuel was changed to 140 proof denatured ethanol. The combustion air temperature rose to 70°C, the rpm's rose to 3500, and the engine ran smoothly.

After 10 minutes, the fuel was changed to 120 proof denatured ethanol. The combustion air temperature increased to 73°C, the rpm's decreased to 3300, and the engine ran smoothly.

After 10 minutes, the fuel was changed to 100 proof denatured ethanol. The combustion air temperature increased to 74°C, the rpm's decreased to 3100, and the engine ran smoothly.

After 10 minutes, the fuel was changed to 90 proof denatured ethanol. The combustion air temperature remained at 74°C, the rpm's reduced to 3100, and the engine ran smoothly.

After 10 minutes, the fuel was changed to 80 proof denatured ethanol. The combustion air temperature raised to 76°C and the rpm's reduced to 2900. At that point, an infrequent backfire was noted in the engine. 100 proof denatured ethanol was then used as the primary fuel and the bypass to the heat exchanger was closed. The combustion air temperature rose to 160°C and during the next minutes increased to 170°C. The rpm's increased to 4000 rpm and the engine ran smoothly.

Another series of tests were run with the engine adjusted to operate at 3500 rpm's and with the heat exchanger removed.. The engine was started with 200 proof ethanol as the fuel and as soon as the intake air temperature at the injector module had risen to about 50°C, the fuel was changed to 100 proof ethanol and the engine ran smoothly. The intake air temperature rose to 70°C where it stabilized. The engine was turned off, restarted and continued to run smoothly. By adjusting and opening the air intake, the rpm could be increased to over 4000. By slightly closing the same air intake, the rpm could be reduced to 1500. At both ranges of rpm, the engine ran smoothly and was turned off and restarted without difficulty and continued to run smoothly.

The rpm of an engine using the method of the present invention may be regulated by regulating the amount of air flow into the combustion chamber. In a convention gasoline powered engine, the engine rpm is regulated by regulating the amount of gasoline that is introduced into the combustion chambers.

Gaseous fuels such as methane, ethane, butane or natural gas and the like could be liquified and substituted for e.g. ethanol and methanol used in the present invention.

## Claims

1. A method for combusting an aqueous fuel in an internal combustion engine to produce approximately as much power as the same volume of gasoline, said internal combustion engine being capable of producing a range of engine revolutions per minute (rpm) and having one or more combustion chambers and a carburetor or a fuel injection system for mixing said fuel and air and introducing said mixture into said combustion chamber or chambers, said method comprising:
preheating said air for combustion and introducing said preheated air into said carburetor or fuel injection system,
introducing said aqueous fuel into said carburetor or fuel injection system to mix with said combustion air, said fuel comprising water from 20% to 70% by volume of the total volume of said fuel, and a carbonaceous material selected from the group consisting of ethanol, methanol, gasoline, diesel and kerosene fuel, or mixtures thereof, and
introducing and combusting said aqueous fuel and combustion air in said combustion chamber or chambers in the presence of a hydrogen-producing catalyst to operate said engine.

2. The method as set forth in claim 1, wherein said fuel comprises water from 20% to 50% by volume of the total volume of said fuel.

3. The method as set forth in claim 1 or 2, wherein said carbonaceous material is selected from the group consisting of ethanol, methanol and gasoline, or mixtures thereof.

4. The method as set forth in claim 1 or 2, wherein said combustion air is initially heated by a heater and then heated by heat from hot exhaust gases from said engine after the engine is operating.

5. The method as set forth in claim 1 or 2, wherein said catalyst is selected from platinum, platinum nickel alloy and noble metals.

6. The method as set forth in claim 1 or 2, wherein said catalyst is platinum.

7. The method as set forth in claim 1, wherein said air is preheated to at least 177 °C or (350 °F) to 204 °C (400 °F) as said air enters said carburetor.

8. The method as set forth in claim 1, wherein said air is preheated from 50 °C (122 °F) to 70 °C (158 °F) as said air enters said fuel injection system.

9. The method as set forth in claim 1 or 2, wherein said aqueous fuel is introduced into said carburetor or said fuel injection system at ambient temperature.

10. The method as set forth in claim 1 or 2, wherein said rpm's are regulated by regulating the air flow into the carburetor or fuel injection system.

11. The use of an aqueous fuel for combustion with air in an internal combustion engine in the presence of a hydrogen-producing catalyst, wherein the water component also serves to function as a source of energy to operate said engine, said fuel comprising water from 20% to 70% by volume of the total volume of said fuel, and a carbonaceous material selected from the group consisting of ethanol, methanol, gasoline, diesel and kerosene fuel, or mixtures thereof.

12. The use as set forth in claim 11, said fuel comprising water from 20% to 60% by volume of the total volume of said fuel.

13. The use as set forth in claim 11, said fuel comprising water from 20% to 50% by volume of the total volume of said fuel.

14. The use as set forth in claims 11 to 13, wherein said carbonaceous material is selected from the group consisting of ethanol, methanol and gasoline, or mixtures thereof.

15. The use as set forth in claim 11, wherein said internal combustion engine is a diesel-powered engine.

16. The use as set forth in claim 11, wherein said internal combustion engine is a jet engine.

## Patentansprüche

1. Verfahren zur Verbrennung eines wäßrigen Brennstoffes in einem Verbrennungsmotor, um annähernd genau soviel Leistung wie mit dem gleichen Volumen an Benzin zu produzieren, wobei der Verbrennungsmotor in einem bestimmten Drehzahlbereich (Umdrehungen/Minute) arbeitet und eine oder mehrere Verbrennungskammer(n) und einen Vergaser oder ein Brennstoffeinspritzsystem zum Mischen des Brennstoffes mit Luft und zum Einleiten des Gemisches in die Verbrennungskammer(n) besitzt, wobei das Verfahren umfaßt:
Vorheizen der Luft für die Verbrennung und Einleiten der vorgeheizten Luft in den Vergaser oder in das Brennstoffeinspritzsystem,
Einleiten des wäßrigen Brennstoffes in den Vergaser oder in das Brennstoffeinspritzsystem, um diesen mit der Luft für die Verbrennung zu mischen, wobei der Brennstoff 20 bis 70 Vol.-% Wasser, bezogen auf das gesamte Brennstoffvolumen, und ein kohlenstoffhaltiges Material, ausgewählt aus der Gruppe, bestehend aus Ethanol, Methanol, Benzin, Diesel und Kerosinbrennstoff, oder Gemische davon, umfaßt, und
Einleiten und Verbrennen des wäßrigen Brennstoffes mit der Luft für die Verbrennung in der/den Verbrennungskammer(n) in Gegenwart eines Wasserstoff produzierenden Katalysators, um den Motor zu betreiben.

2. Verfahren nach Anspruch 1, worin der Brennstoff 20 bis 50 Vol.-% Wasser umfaßt, bezogen auf das gesamte Brennstoffvolumen.

3. Verfahren nach Anspruch 1 oder 2, worin das kohlenstoffhaltige Material ausgewählt ist aus der Gruppe, bestehend aus Ethanol, Methanol und Benzin, oder Gemischen davon.

4. Verfahren nach Anspruch 1 oder 2, worin die Luft für die Verbrennung zuerst mit einem Heizgerät und dann mit Hilfe der Wärme der heißen Abgase des Motors, nachdem der Motor in Betrieb ist, erwärmt wird.

5. Verfahren nach Anspruch 1 oder 2, worin der Katalysator aus Platin, einer Platin-Nickel-Legierung und Edelmetallen ausgewählt ist.

6. Verfahren nach Anspruch 1 oder 2, worin der Katalysator Platin ist.

7. Verfahren nach Anspruch 1, worin die Luft auf mindestens 177°C (350°F) bis 204°C (400°F) vorgeheizt wird, bevor sie in den Vergaser eintritt.

8. Verfahren nach Anspruch 1, worin die Luft auf 50°C (122°F) bis 70°C (158°F) vorgeheizt wird, bevor sie in das Brennstoffeinspritzsystem eintritt.

9. Verfahren nach Anspruch 1 oder 2, worin der wäßrige Brennstoff in den Vergaser oder in das Brennstoffeinspritzsystem bei Umgebungstemperatur eingeleitet wird.

10. Verfahren nach Anspruch 1 oder 2, worin die Umdrehungen/Minute durch Einstellen des Luftstroms, der in den Vergaser oder in das Brennstoffeinspritzsystem eintritt, gesteuert werden.

11. Verwendung eines wäßrigen Brennstoffes zur Verbrennung mit Luft in einem Verbrennungsmotor in Gegenwart eines Wasserstoff produzierenden Katalysators, wobei der Wasserbestandteil ebenfalls als Energiequelle dient, um den Motor zu betreiben, wobei der Brennstoff 20 bis 70 Vol.-% Wasser, bezogen auf das gesamte Brennstoffvolumen, und ein kohlenstoffhaltiges Material, ausgewählt aus der Gruppe, bestehend aus Ethanol, Methanol, Benzin, Diesel und Kerosinbrennstoff, oder Gemische davon, umfaßt.

12. Verwendung nach Anspruch 11, worin der Brennstoff 20 bis 60 Vol.-% Wasser umfaßt, bezogen auf das gesamte Brennstoffvolumen.

13. Verwendung nach Anspruch 11, worin der Brennstoff 20 bis 50 Vol.-% Wasser umfaßt, bezogen auf das gesamte Brennstoffvolumen.

14. Verwendung nach einem der Ansprüche 11 bis 13, worin das kohlenstoffhaltige Material ausgewählt ist aus der Gruppe, bestehend aus Ethanol, Methanol und Benzin, oder Gemischen davon.

15. Verwendung nach Anspruch 11, worin der Verbrennungsmotor ein mit Diesel betriebener Motor ist.

16. Verwendung nach Anspruch 11, worin der Verbrennungsmotor ein Strahltriebwerk ist.

## Revendications

1. Procédé de combustion d'un carburant aqueux dans un moteur à combustion interne pour produire approximativement autant de puissance que le même volume d'essence, ledit moteur à combustion interne étant capable de produire une gamme de tours moteur par minute (tr/min.) et ayant une ou plusieurs chambres de combustion et un carburateur ou un système d'injection de carburant pour mélanger ledit carburant et de l'air et introduire ledit mélange dans ladite ou lesdites chambre(s) de combustion, ledit procédé comprenant :
le préchauffage dudit air pour la combustion et l'introduction dudit air préchauffé dans lesdits carburateur ou système d'injection de carburant,
l'introduction dudit carburant aqueux dans ledit carburateur ou système d'injection de carburant pour le mélanger avec ledit air de combustion, ledit carburant comprenant de l'eau de 20 % à 70 % en volume du volume total dudit carburant, et une matière carbonée choisie dans le groupe constitué de l'éthanol, du méthanol, de l'essence, du diesel et du carburant kérosène, ou des mélanges de ceux-ci, et
l'introduction et la combustion desdits carburant aqueux et air de combustion dans ladite ou lesdites chambre(s) de combustion, en présence d'un catalyseur produisant de l'hydrogène, pour faire fonctionner ledit moteur.

2. Procédé selon la revendication 1, dans lequel ledit carburant comprend de l'eau à 20 % à 50 % en volume du volume total dudit carburant.

3. Procédé selon la revendication 1 ou 2, dans lequel ladite matière carbonée est choisie dans le groupe constitué de l'éthanol, du méthanol et de l'essence, ou des mélanges de ceux-ci.

4. Procédé selon la revendication 1 ou 2, dans lequel ledit air de combustion est initialement chauffé par un radiateur puis chauffé par la chaleur des gaz d'échappement chauds dudit moteur après la mise en route du moteur.

5. Procédé selon la revendication 1 ou 2, dans lequel ledit catalyseur est choisi parmi le platine, un alliage platine-nickel, et les métaux nobles.

6. Procédé selon la revendication 1 ou 2, dans lequel ledit catalyseur est le platine.

7. Procédé selon la revendication 1, dans lequel ledit air est préchauffé à au moins 177 °C (350 °F) à 204 °C (400 °F) à mesure que ledit air entre dans ledit carburateur.

8. Procédé selon la revendication 1, dans lequel ledit air est préchauffé de 50 °C (122 °F) à 70 °C (158 °F) à mesure que ledit air entre dans ledit système d'injection de carburant.

9. Procédé selon la revendication 1 ou 2, dans lequel ledit carburant aqueux est introduit dans ledit carburateur ou ledit système d'injection de carburant à température ambiante.

10. Procédé selon la revendication 1 ou 2, dans lequel lesdits tr/min. sont réglés en régulant le flux d'air dans le carburateur ou le système d'injection de carburant.

11. Utilisation d'un carburant aqueux pour combustion avec de l'air dans un moteur à combustion interne en présence d'un catalyseur formant de l'hydrogène, dans laquelle le constituant aqueux sert aussi à fonctionner en tant que source d'énergie pour faire fonctionner ledit moteur, ledit carburant comprenant de l'eau à 20 % à 70 % en volume du volume total dudit carburant, et une matière carbonée choisie dans le groupe constitué de l'éthanol, du méthanol, de l'essence, .du diesel et du carburant kérosène, ou des mélanges de ceux-ci.

12. Utilisation selon la revendication 11, ledit carburant comprenant de l'eau à 20 % à 60 % en volume du volume total dudit carburant.

13. Utilisation selon la revendication 11, ledit carburant comprenant de l'eau à 20 % à 50 % en volume du volume total dudit carburant.

14. Utilisation selon les revendications 11 à 13, dans laquelle ladite matière carbonée est choisie dans le groupe constitué de l'éthanol, du méthanol et de l'essence, ou des mélanges de ceux-ci.

15. Utilisation selon la revendication 11, dans laquelle ledit moteur à combustion interne est un moteur fonctionnant au diesel.

16. Utilisation selon la revendication 11, dans laquelle ledit moteur à combustion interne est un moteur à réaction.
